# EUROPEAN PATENT APPLICATION

(11) **EP 4 596 874 A1**
(43) Date of publication of application: **06.08.2025**
(21) Application number: 23869979.7
(22) Date of filing: 03.08.2023
(51) Int. Cl.: F04B 17/03

(54) **DRIVE AND CONTROL INTEGRATED SERVO MOTOR PUMP AND COOLING STRUCTURE**

(30) Priority: 30.09.2022 CN 202211218046
(71) Applicant: Beijing Institute of Precision Mechatronics And Controls, Beijing 100076 (CN)
(72) Inventor: ZENG, Si, Beijing 100076 (CN); SUN, Dongning, Beijing 100076 (CN); LIU, Huixiang, Beijing 100076 (CN); ZHAO, Shoujun, Beijing 100076 (CN); ZHANG, Peng, Beijing 100076 (CN); CHEN, Junjie, Beijing 100076 (CN); WANG, Yi, Beijing 100076 (CN); WANG, Wei, Beijing 100076 (CN); WANG, Yuhao, Beijing 100076 (CN); FENG, Wei, Beijing 100076 (CN); ZHANG, Lijuan, Beijing 100076 (CN); QUAN, Yunqing, Beijing 100076 (CN); LI, Hongyan, Beijing 100076 (CN); YU, Bin, Beijing 100076 (CN); WANG, Xin, Beijing 100076 (CN)
(74) Representative: Studio Torta S.p.A.
(86) International application number: PCT/CN2023/110881
(87) International publication number: WO 2024/066733

(57) **Abstract**

A drive and control integrated servo motor pump and cooling structure, comprising a plunger pump assembly (5), a servo motor assembly (6), a drive controller (2), a drive and control housing, and a rear housing (35). The rear housing (35) is connected to one end of a motor pump housing (7); a controller mounting cavity, a first cavity (71), and a second cavity (72) are provided inside an overall structure formed by the motor pump housing (7) and the rear housing (35); the first cavity (71) is used for accommodating the plunger pump assembly (5); the second cavity (72) is used for accommodating the servo motor assembly (6); the plunger pump assembly (5) comprises a plunger pump rotor; the servo motor assembly comprises a stator component (8) and a rotor component (23); the plunger pump rotor and the rotor component (23) are coaxially connected by means of a rotating shaft (25); the controller mounting cavity is used for accommodating the drive controller (2); the servo motor assembly (6) is used for driving the plunger pump assembly (5) to implement forward and reverse rotation; and the drive controller (2) is used for driving and controlling the servo motor assembly (6) to operate. Drive and control functions are coaxially integrated, and the cooling effect is good.

## Description

The present disclosure claims the priority of Chinese patent application No. 202211218046.1 filed in China National Intellectual Property Administration on September 30, 2022, with an invention title of "A coaxial integral servo motor pump integrated with drive and control functions", the entire content of which is incorporated herein by reference.

### FIELD

The present disclosure relates to a drive and control integrated servo motor pump and a cooling structure, which can be quickly connected to a hydraulic cylinder, thus realizing rapid industrial application, and giving consideration to great maintainability.

### BACKGROUND

The modern advanced electronic technology, information technology, material science and manufacturing technology have developed rapidly. New technologies have played the role of challengers and competitors for the hydraulic technology in some aspects (such as full electrification), but at the same time, they have also brought opportunities for the further development of the hydraulic technology, such as combining the modern advanced digital technology, network technology, motor and drive control technology, sensing technology, and intelligent manufacturing technology with the hydraulic technology, which makes the modern hydraulic technology more integrated, high-end, intelligent and autonomous with more digital interconnection, environmental protection, energy conservation, reliability and convenience. This is of great significance for all countries and their enterprises to seize the commanding heights of competition by using the technology itself, and it is also of great significance to contribute to building a resource-saving and environment-friendly society.

The electro-hydrostatic actuator (EHA) system with the servo motor pump as the core has developed vigorously in recent years because it meets the social needs and technical development trends of electrification, intelligentization, energy conservation and environmental protection (about 70% higher than the efficiency of the traditional hydraulic system). The research and development of dynamoelectric products in the hydraulic industry with the servo motor pump as the core is in a period of rapid rise. The servo motor pump is the core control and power component of the EHA. By controlling the speed and direction of the servo motor through frequency conversion, it realizes the reversing and four-quadrant operation of the hydraulic pump, outputs the hydraulic fluid with controllable flow rate, and drives the hydraulic actuator to move. The servo motor pump can highly integrate the oil pump, the servo motor, the hydraulic valve, the drive controller, the network communication module and other modules as required.

At present, the main product on the market is in a split form of "(motor+pump)+external drive controller", and also, the product in an integrated form of "motor+pump+integrated drive controller" has begun to appear. However, the product in a deeply integrated form of "coaxially integrated motor and pump+integrated drive controller" has not yet appeared in the market. The present disclosure relates to a product of "coaxially integrated motor and pump+integrated drive controller", which is mainly oriented toward occasions with application requirements of man-machine friendliness, simple use, energy conservation, high efficiency, low noise, environmental protection and good cost performance.

### SUMMARY

The technical problem solved by the present disclosure is to overcome the shortcomings of the related art and provide a drive and control integrated servo motor pump and a cooling structure, which can realize energy conversion and also have the characteristics of a highly integrated output control function.

The coaxial integral servo motor pump module integrates the servo motor and the hydraulic pump in the same housing coaxially, which has high dynamic response, can realize control within the response time of 10ms, and can perform work at a variable speed according to actual working conditions, with the maximum speed of 7000rpm, the maximum output flow rate of 48L/min and the maximum output pressure of 35MPa, and also has good energy conservation effects.

The technical solution of the present disclosure is as follows.

In a first aspect, a drive and control integrated servo motor pump is provided, which includes a piston pump assembly, a servo motor assembly, a drive controller, a rear housing and a drive and control housing. The rear housing is connected to an end of a motor pump housing, and an integral structure formed by the motor pump housing and the rear housing defines a controller mounting cavity, a first cavity and a second cavity therein. The first cavity is configured to accommodate the piston pump assembly, the second cavity is configured to accommodate the servo motor assembly, the piston pump assembly includes a piston pump rotor, the servo motor assembly includes a stator component and a rotor component, and the piston pump rotor and the rotor component are coaxially connected through a rotating shaft; and the controller mounting cavity is configured to accommodate the drive controller. The servo motor assembly is configured to drive the piston pump assembly to realize forward rotation and reverse rotation, and the drive controller is configured to drive and control the servo motor assembly to operate.

In some implementations, the motor pump housing is provided with a blind hole, the blind hole is located at a side of the second cavity, one end of the blind hole is communicated with the second cavity through a motor wire hole, and the other end of the blind hole is communicated with the controller mounting cavity.

An electrical connector is hermetically connected in the blind hole so that the second cavity is not communicated with the controller mounting cavity, the electrical connector is connected with the servo motor assembly and the drive controller, a connecting line between the electrical connector and the servo motor assembly passes through the blind hole and the motor wire hole, and a connecting line between the electrical connector and the drive controller passes through a communicated region of the blind hole and the controller mounting cavity.

An end of the servo motor assembly far away from the piston pump assembly is hermetically connected with an inner wall of the second cavity.

In some implementations, an end cover and a rear cover are connected in the motor pump housing, the end cover is located at an end of the second cavity far away from the first cavity, the end cover is sealed with the inner wall of the second cavity, an end of the rotating shaft passes through the end cover, and supports and is connected with the end cover, the rear cover is connected with a side of the end cover far away from the first cavity, and the rear cover is hermetically connected with the end cover.

In some implementations, the controller mounting cavity is a space within the rear housing; a lead on one side of the electrical connector passes through the motor wire hole and is connected with the stator component, and a lead on the other side of the electrical connector is connected with the drive controller.

In some implementations, a heat dissipation fan is mounted on a side of the rear housing facing away from the motor pump housing.

In some implementations, the drive and control housing includes the motor pump housing and a controller housing, the controller housing and the motor pump housing enclose and form the controller mounting cavity, and the controller mounting cavity is communicated with the blind hole and located on a side of the second cavity; and the drive controller located in the controller mounting cavity is electrically connected with the servo motor assembly through the electrical connector.

In some implementations, a capacitor is arranged in the rear housing, an input wire of the capacitor is connected with an external power supply, and an output wire of the capacitor is connected with a power input end of the drive controller.

In some implementations, the rear housing is provided with a threading hole, and the threading hole penetrates an inner wall and an outer wall of the rear housing; and the output wire of the capacitor penetrates out of the rear housing from the threading hole, then penetrates into the controller mounting cavity and is connected with the power input end of the drive controller, and the input wire of the capacitor is connected with an external power supply, so that a space within the rear housing is not communicated with the second cavity.

In some implementations, a valve plate is arranged in the first cavity, and the valve plate is connected in the first cavity and configured to support an end of the rotating shaft adjacent to the piston pump assembly.

The valve plate is provided with a low-pressure oil drain hole penetrating through the valve plate, the rotating shaft is provided with a central hole, and the central hole penetrates through the rotating shaft at an axis position of the rotating shaft.

In some implementations, at least two low-pressure oil drain holes are arranged, and the at least two low-pressure oil drain holes are evenly distributed on the valve plate around an axis of the rotating shaft.

In some implementations, an end of the motor pump housing adjacent to the piston pump assembly is provided with a cold oil inlet, an inner wall of the motor pump housing is provided with a cooling oil groove, one end of the cooling oil groove is communicated with the cold oil inlet, and the other end of the cooling oil groove is communicated with the second cavity.

In some implementations, a plurality of cooling oil grooves are arranged, and the plurality of cooling oil grooves are evenly distributed on the motor pump housing around an axis of the rotating shaft.

In some implementations, the motor pump housing is provided with a first annular groove, and the first annular groove is communicated with the plurality of cooling oil grooves.

In some implementations, the inner wall of the motor pump housing is provided with a second annular groove, the second annular groove is communicated with the plurality of cooling oil grooves, the second annular groove communicates the cooling oil groove with the second cavity, and the second annular groove is located on a side of the first annular groove facing away from the cold oil inlet.

In some implementations, the first annular groove is located at an end of the second cavity adjacent to the piston pump assembly; and the second annular groove is located at an end of the motor pump housing far away from the piston pump assembly.

In some implementations, an outer circumferential surface of the end cover is provided with a second sealing groove, and a second sealing ring is arranged in the second sealing groove, and is configured for sealing between the end cover and an inner wall of the motor pump housing.

In some implementations, the end cover is provided with a through hole, the rotating shaft passes through the through hole, the rear cover is provided with a spigot inserted into the through hole at a position opposite to the through hole, a first sealing groove is arranged on the spigot in a circumferential direction of the spigot, and a first sealing ring is arranged in the first sealing groove, and is configured for sealing between the spigot and an inner wall of the end cover defining the through hole.

In some implementations, a third sealing groove is arranged on the electrical connector in a circumferential direction of the electrical connector, and a third sealing ring is arranged in the third sealing groove, and is configured to seal the blind hole.

In some implementations, a plurality of heat dissipation grooves for heat dissipation are arranged on an outer periphery of the motor pump housing.

In a second aspect, a cooling structure of a servo motor pump is provided, which is arranged in a motor pump housing, and the motor pump housing defines a first cavity for accommodating a piston pump assembly and a second cavity for accommodating a servo motor assembly, and the servo motor assembly includes a stator component and a rotor component, and a piston pump rotor and the rotor component are coaxially connected through a rotating shaft; the cooling structure includes a valve plate arranged in the first cavity and a central hole penetrating the rotating shaft at an axis position of the rotating shaft, the valve plate is connected in the first cavity and configured to support an end of the rotating shaft adjacent to the piston pump assembly; and the valve plate is provided with a low-pressure oil drain hole penetrating through the valve plate; and one end of the central hole is communicated with an external oil, the other end of the central hole is communicated with the second cavity, the first cavity is communicated with the second cavity, the first cavity is communicated with the external oil through the low-pressure oil drain hole.

In some implementations, an inner wall of the motor pump housing is provided with a plurality of cooling oil grooves, one end of the cooling oil groove is communicated with the external oil, and the other end of the cooling oil groove is communicated with the second cavity.

In some implementations, the motor pump housing is provided with a first annular groove, and the first annular groove is communicated with the plurality of cooling oil grooves; and the inner wall of the motor pump housing is provided with a second annular groove, the second annular groove is communicated with the plurality of cooling oil grooves, the second annular groove communicates the cooling oil groove with the second cavity, and the second annular groove is located on a side of the first annular groove facing away from a cold oil inlet.

To sum up, the present disclosure at least includes the following beneficial technical effects.
1. The drive and control integrated servo motor pump of the present disclosure integrates the coaxial integral servo motor pump module, the drive and control module and the quick-connect plug, and may be assembled and tested before leaving the factory, and may be used only by inserting two plugs. Compared with the traditional motor pump set, the present disclosure saves the time of mounting, debugging, wiring and troubleshooting, and saves the mounting space without adding an additional electric cabinet.
2. The drive control module is located at the rear end of the integral servo motor pump module, and the sealed electrical connector seals the oil inside the motor pump (the oil does not enter the drive and control module).
3. Since the external cable plug and the control plug are connected with the control socket and the high-voltage socket of the motor pump housing, the external connection is simple and convenient. Compared with the traditional connection mode, two plugs of the controller are reduced, and there is no external wiring, so that the mounting mode is more simple and convenient.
4. In order to ensure that the servo motor pump can work reliably for a long time, a cooling oil circuit is arranged inside the motor pump housing and a plurality of cooling oil circuits are arranged at the mounting contact surface between the inner wall of the motor pump housing and the motor stator component. The cold oil introduced from the cooling oil port of the motor pump enters the servo motor pump, and takes away the heat generated by the servo motor and the pump in time, and the formed hot oil flows back to the EHA system to be cooled for recycling. The cooling oil port of the motor pump is butted and integrated with the EHA system.
5. The heat dissipation groove structure is arranged outside the motor pump housing to increase the heat dissipation area, and the heat dissipation fan for cooling is added at the tail of the controller to ensure the heat dissipation and working stability of the controller.

### BRIEF DESCRIPTION OF THE DRAWINGS

Fig. 1 is a schematic diagram of a drive and control integrated servo motor pump in embodiment 1 of the present disclosure.
Fig. 2 is an external view of the drive and control integrated servo motor pump in embodiment 1 of the present disclosure.
Fig. 3 is a sectional view of the drive and control integrated servo motor pump in embodiment 1 of the present disclosure.
Fig. 4 is a view of a cooling oil circuit of the drive and control integrated servo motor pump in embodiment 1 of the present disclosure.
Fig. 5 is a structural view of a servo motor pump housing in embodiment 1 of the present disclosure, in which Fig. 5a is a structural schematic view showing a high-voltage socket and a control socket, and Fig. 5b is a structural schematic view showing a blind hole.
Fig. 6 is an external view of a drive and control integrated servo motor pump in embodiment 2 of the present disclosure.
Fig. 7 is a sectional view of the drive and control integrated servo motor pump in embodiment 2 of the present disclosure.
Fig. 8 is a view of a cooling oil circuit of the drive and control integrated servo motor pump in embodiment 2 of the present disclosure.
Fig. 9 is a structural schematic view of a rear housing in embodiment 2 of the present disclosure.
Fig. 10 is a schematic view showing a relative position of a wire hole and a blind hole in the rear housing in embodiment 2 of the present disclosure.

Description of reference numerals: 1 coaxial integral servo motor pump; 2 drive controller; 3 high-voltage socket; 4 control socket;
5 piston pump assembly; 6 servo motor assembly; 7 motor pump housing; 71 first cavity; 72 second cavity; 8 stator component; 9 electrical connector; 10 stator lead; 11 resolver lead; 12 third sealing groove; 13 drive wire; 14 control wire;
15 heat dissipation fan; 16 controller housing; 17 drive board; 18 control board;
19 rear cover; 20 first sealing groove; 21 second sealing groove; 22 end cover; 23 rotor component; 25 rotating shaft; 26 central hole; 27 bearing; 29 valve plate; 30 low-pressure oil drain hole; 31 left outlet;
32 cold oil inlet; 33 heat dissipation groove; 34 cooling oil circuit; 35 rear housing; 36 first through hole; 37 blind hole; 38 second through hole; 39 cooling oil groove; 40 threaded hole; 41 first annular groove; 42 second annular groove;
43 capacitor; 45 resolver; 46 needle bearing; 47 fourth sealing groove; 49 motor wire hole; 44 power cord threading hole; 50 control cord threading hole.

### DETAILED DESCRIPTION

In the following, the present disclosure will be described in further detail with reference to the accompanying drawings and specific embodiments.

### Embodiment 1

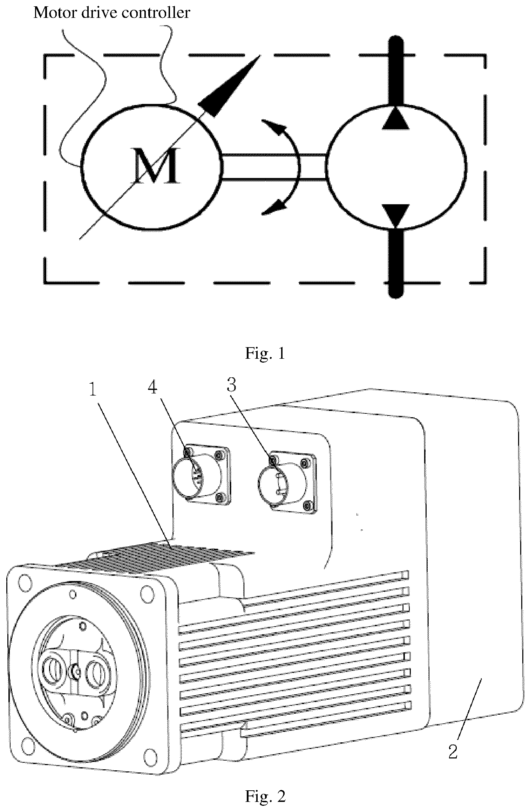

The embodiment of the present disclosure discloses a drive and control integrated servo motor pump, as shown in Fig. 1, which includes a coaxial integral servo motor pump 1, a drive controller 2, an electrical connector 9, a sealing assembly and an internal cooling oil circuit.

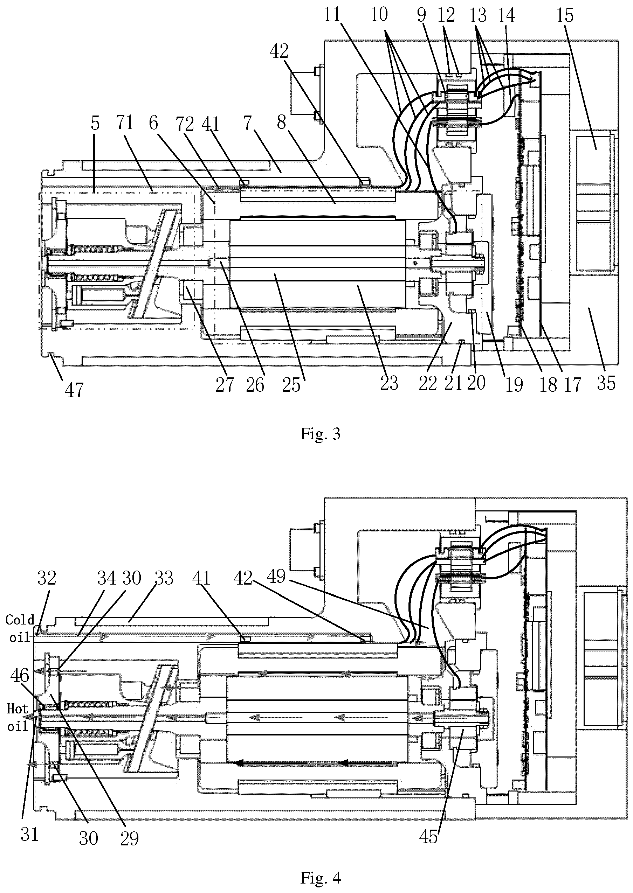

As shown in Fig. 3, a drive and control housing, a rear housing 35, a piston pump assembly 5 and a servo motor assembly 6 constitute the coaxial integral servo motor pump 1. The drive and control housing is a motor pump housing 7.

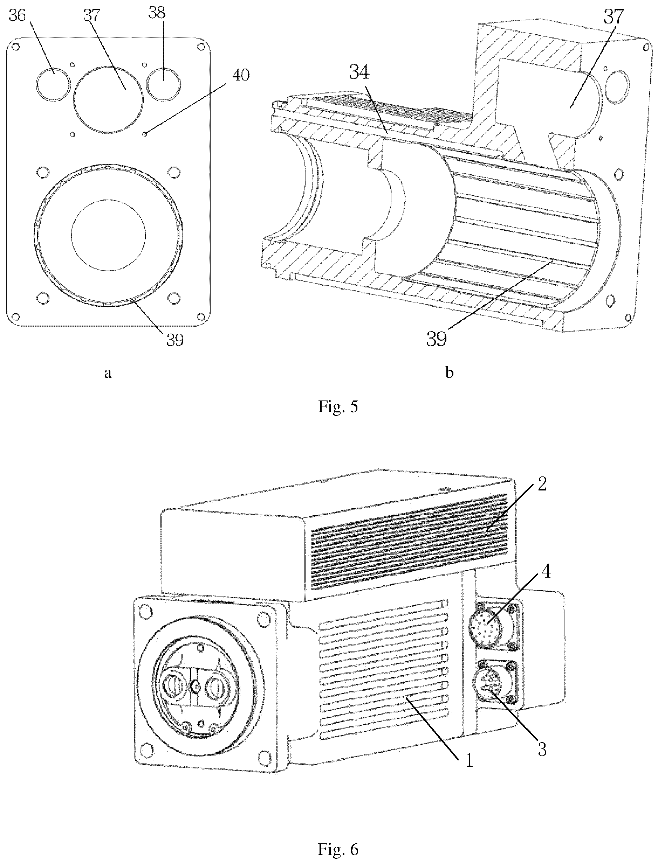

As shown in Figs. 3 and 5b, the rear housing 35 is connected to an end of the motor pump housing 7, and the motor pump housing 7 defines therein a first cavity 71 for accommodating the piston pump assembly 5 and a second cavity 72 for accommodating the servo motor assembly 6. In this embodiment, the space within the rear housing 35 forms a controller mounting cavity for mounting the drive controller 2. The first cavity 71 and the second cavity 72 are formed in the motor pump housing 7, and the piston pump assembly 5 includes a piston pump rotor. The servo motor assembly 6 includes a stator component 8 and a rotor component 23, the stator component 8 is hot-assembled with the motor pump housing 7, and the rotor component 23 and the piston pump rotor share a rotating shaft 25. A resolver 45 is arranged between an end of the rotating shaft 25 facing the rear housing 35 and the motor pump housing 7.

The motor pump housing 7 is provided with a blind hole 37, and the blind hole 37 is located at a side of the second cavity 72. An end of the blind hole 37 facing away from the rear housing 35 is communicated with the second cavity 72 through a motor wire hole 49, and an end of the blind hole 37 facing the rear housing 35 is communicated with the controller mounting cavity. The electrical connector 9 is hermetically connected in the blind hole 37, so that the second cavity 72 will not communicate with the controller mounting cavity, so as to ensure that the oil in the second cavity 72 does not enter the controller mounting cavity. An inner side of the electrical connector 9 is respectively connected with the stator component 8 and the resolver 45 in the second cavity 72 through a stator lead 10 and a resolver lead 11 passing through the blind hole 37, and an outer side of the electrical connector 9 is connected with the drive controller 2 through a wire. Specifically, the drive controller 2 includes a drive board 17 and a control board 18. The drive board 17 is electrically connected with the electrical connector 9 through a drive wire 13, and the control board 18 is electrically connected with the electrical connector 9 through a control wire 14.

As shown in Fig. 2, Fig. 3 and Fig. 5a, the motor pump housing 7 is provided with a high-voltage socket 3 and a control socket 4, and an external high-voltage cable is connected with the high-voltage socket 3. An internal side of the high-voltage socket 3 is connected with the drive board 17 through a wire via a first through hole 36 in the motor pump housing 7, and then is connected with an external (right) pin of the electrical connector 9 through a wire led out from the drive board 17, and a corresponding internal (left) pin of the electrical connector 9 is connected with the stator lead 10 of the servo motor assembly 6, so as to realize the drive power supply for the motor pump. A cable for an external control signal and a motor pump data feedback signal is connected with the control board 18 through the control socket 4 with a wire via a second through hole 38 in the motor pump housing 7, and the wire led out from the control board 18 is connected with another external (right) pin of the electrical connector 9, and a corresponding internal (left) pin of the sealed electrical connector 9 is connected with the resolver lead 11 of the resolver 45, so as to realize control of the motor pump.

After the servo motor assembly 6 is powered on by the drive controller 2, the electromagnetic force is converted into mechanical power, which drives the piston pump rotor to rotate to generate controllable hydraulic fluid with different pressures and flow directions, so as to drive a hydraulic cylinder to move bidirectionally.

A valve plate 29 is located in the first cavity 71, and a third through hole is formed in the middle of the valve plate 29. A needle bearing is arranged in the third through hole to support an end of the rotating shaft 25 adjacent to the piston pump assembly 5, and the sealing assembly is hermetically connected in the second cavity 72 to support another end of the rotating shaft 25.

As shown in Fig. 3, the rotor component 23 and a rotating part of the piston pump assembly 5 operate in the motor pump housing 7 filled with the oil. The electrical connector 9 is mounted at the blind hole 37, and sealing is realized by mounting double O-shaped sealing rings in third sealing grooves 12 axially arranged on the electrical connector 9, so that the oil in the blind hole 37 and the second cavity is sealed and cannot enter the drive controller 2. The electrical connector 9 is connected with the motor pump housing 7 through a screw fitted in a threaded hole 40 of the motor pump housing 7.

In addition, the sealing assembly includes an end cover 22 and a rear cover 19, the end cover 22 is connected in the second cavity 72, the rotating shaft 25 supports and is connected with the end cover 22, and the rear cover 19 is connected to a side of the end cover 22 facing the drive controller 2. The end cover 22 is provided with a through hole, the rotating shaft 25 passes through the through hole, the rear cover 19 is provided with a spigot inserted into the through hole at a position opposite to the through hole, a first sealing groove 20 is arranged on the spigot along a circumferential direction of the spigot, and a first sealing ring is arranged in the first sealing groove 20, and used for sealing between the spigot and an inner wall of the end cover defining the through hole. An outer circumferential surface of the end cover 22 is provided with a second sealing groove 21, and a second sealing ring is arranged in the second sealing groove 21, and is used for sealing between the end cover 22 and an inner wall of the motor pump housing 7. In order to ensure the sealing effect, two second sealing grooves 21 may be arranged. In this way, the sealing between the end cover 22 and the inner wall of the second cavity 72 and the sealing between the rear cover 19 and the end cover 22 are realized. The whole structure realizes the sealing of the oil in the servo motor pump through a static sealing arrangement, and isolates the oil from the drive controller 2 at the rear side, so that the sealing is reliable and there is no hidden danger of oil leakage.

As shown in Fig. 3, Fig. 4 and Fig. 5b, the internal cooling oil circuit includes a cooling oil groove 39, a central hole 26 and a low-pressure oil drain hole 30, and the cooling oil groove 39 penetrates from an end of the motor pump housing 7 adjacent to the piston pump assembly 5 to an inner wall of the second cavity 72 far away from the piston pump assembly 5, and is located at a mounting contact surface of the inner wall of the motor pump housing 7 and the stator component 8. A plurality of cooling oil grooves 39 are arranged on the motor pump housing 7, and the plurality of cooling oil grooves 39 are evenly distributed around an axis of the rotating shaft 25. The motor pump housing 7 is provided with a first annular groove 41 and a second annular groove 42. The first annular groove 41 is located at the end of the motor pump housing 7 adjacent to the piston pump assembly 5, and the first annular groove 41 is communicated with the plurality of cooling oil grooves 39. The second annular groove 42 is located at an end of the motor pump housing 7 far away from the piston pump assembly 5, and the second annular groove 42 is communicated with the plurality of cooling oil grooves 39 and the second cavity 72. The first annular groove 41 is used to make a cooling oil evenly distributed in different cooling oil grooves 39, and the second annular groove 42 also plays the same role. The cooling oil flows into the second cavity 72 from the second annular groove 42 and quickly cools a side of the second cavity 72 far away from the piston pump assembly 5. The end of the motor pump housing 7 adjacent to the piston pump assembly 5 is provided with a cold oil inlet 32, and the cold oil inlet 32 is communicated with the cooling oil grooves 39. The central hole 26 passes through the rotating shaft 25 at an axis position thereof, and the low-pressure oil drain hole 30 passes through the valve plate 29.

A following cooling oil path is formed: the cooling oil enters the cooling oil grooves 39 from the cold oil inlet 32, while being evenly distributed via the first annular groove 41, flows into the second cavity 72 via the second annular groove, and then is divided into two paths of cooling oil, in which one path of cooling oil enters a cavity between the end cover 22 and the rear cover 19 through a gap between the rotating shaft 25 and the end cover 22, and then flows out from the central hole 26; and the other path of cooling oil directly flows in from the second cavity 72, passes through a motor air gap to the first cavity 71, and finally flows out from the low-pressure oil drain hole 30.

The rear cover 19 is provided with a groove on a side facing the end of the rotating shaft 25, and an end of the central hole 26 is located in the groove. An annular part is arranged between the first cavity and the second cavity 72 of the motor pump housing 7, and has an annular inner diameter smaller than inner diameters of the first cavity and the second cavity, and a bearing 27 is arranged between the rotating shaft 25 and the annular part. The end of the central hole 26 in the groove is a right inlet for the cooling oil, and the other end of the central hole 26 is a left outlet 31.

Through the arrangement of the cooling oil circuit, a cooling oil circuit 34 is formed, for the oil to flow therein to be cooled. The cooling oil circuit 34 is communicated to the second cavity 72 from the end of the motor pump housing 7 adjacent to the piston pump assembly 5, and then is divided into two paths. One path passes through the central hole 26 of the rotating shaft 25, and the other path is communicated with the first cavity 71 and passes through the low-pressure oil drain hole 30 of the valve plate 29. The problem of heat dissipation and cooling of the servo motor pump is solved, and the oil in the system is introduced into the servo motor pump for cooling.

In order to further increase the heat dissipation effect from the outside, a heat dissipation groove 33 is arranged on an outer surface of the motor pump housing 7, and a dust-proof and heat dissipation fan 15 is mounted to the rear housing 35 to realize air cooling of the drive controller 2.

The implementation principle of the present disclosure is as follows.

Part of the cold oil with a lower temperature in the EHA system enters the cooling oil circuit 34 through the cold oil inlet 32 on the motor pump housing 7, then is evenly distributed in all the cooling oil grooves 39 through the first annular groove 41, and flows in the cooling oil grooves 39 to cool the motor stator component 8, and then flows into the second cavity 72 from the second annular groove 42. A first part of the cooling oil entering the second cavity 72 enters an air gap between the motor rotor component 23 and the motor stator component 8, and a second part of the cooling oil entering the second cavity 72 flows in from the end of the central hole 26. The first part of the oil enters the first cavity 71 through a gap of the bearing 27, and then flows back to the EHA system through the low-pressure oil drain hole 30 to be cooled again for recycling. The second part of the oil flows in through a right side of the central hole 26 in the rotating shaft 25, flows into the left outlet 31 through the central hole 26, and flows back to the EHA system to be cooled again.

Components or products such as the coaxial integral servo motor pump, the sealed socket, and the like are all involved in the existing inventions or are ready-made products, which may be used as components or parts of the present disclosure.

### Embodiment 2

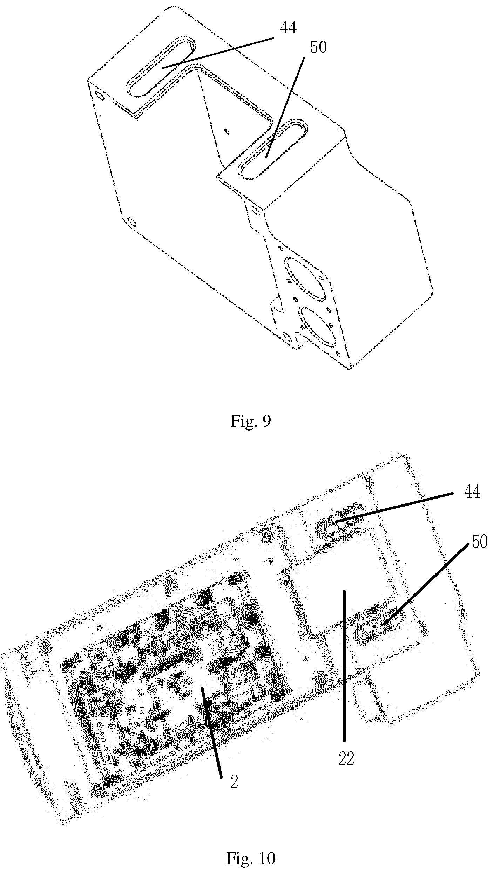

Embodiment 2 differs from embodiment 1 in that, as shown in Figs. 6-10, in embodiment 2, the drive and control housing includes a motor pump housing 7 and a controller housing 16.

The controller housing 16 is connected to a side of the motor pump housing 7 by a screw. The controller housing 16 and the motor pump housing 7 enclose and form a controller mounting cavity for accommodating a drive controller 2. The interior of the motor pump housing 7 is divided into a first cavity 71 for accommodating a piston pump assembly 5 and a second cavity 72 for accommodating a servo motor assembly 6.

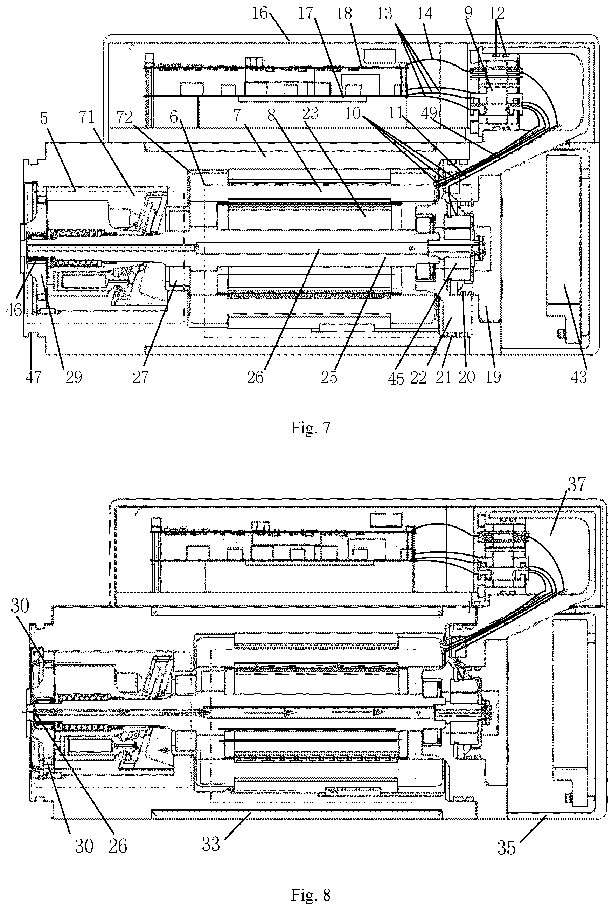

As shown in Fig. 8, an end cover 22 is provided with a blind hole 37 communicated with an end of the controller mounting cavity, and the controller mounting cavity and the blind hole 37 are located at a side of an axis of the first cavity 71 and the second cavity 72. An end of the blind hole 37 is communicated with the second cavity 72 through a motor wire hole 49, and a stator lead 10 and a resolver lead 11 are connected to an inner side (a right side) of the electrical connector 9 through the motor wire hole 49.

A resolver 45 is mounted outside a right end of the rotating shaft 25. A stator part of the resolver 45 is connected with the end cover 22, and a rotor part of the resolver 45 is connected with the rotating shaft 25. The resolver 45 is used to control and adjust a speed and a voltage of the motor. An inner side of the electrical connector 9 is respectively connected with the stator component 8 and the resolver 45 in the second cavity 72 through leads passing through the blind hole 37 and the motor wire hole 49 of the end cover 22. A control board 18 and a drive board 17 are connected to an outer side (a left side) of the electrical connector 9 through wires. An outer periphery of the electrical connector 9 is provided with a third sealing groove 12, a third sealing ring is arranged in the third sealing groove 12, and the third sealing ring is an O-shaped sealing ring, which is used for sealing the oil in the blind hole 37, so that the controller mounting cavity is not communicated with the blind hole 37, and further the controller mounting cavity is not communicated with the first cavity 71 and the second cavity 72, thus ensuring that the cooling oil in the motor pump does not enter the controller mounting cavity.

A capacitor 43 is arranged in the space inside a rear housing 35, and the rear housing 35 is provided with a threading hole which penetrates an inner wall and an outer wall of the rear housing 35. In this embodiment, the threading hole includes a power cord threading hole 44 and a control cord threading hole 50. An output wire of the capacitor 43 penetrates through the power cord threading hole 44 and is connected with a power input end of the drive board 17, and an input wire of the capacitor 43 is connected with an external power supply through a high-voltage socket 3. An inner wire of the control socket 4 passes through the space within the rear housing 35, and passes through the control cord threading hole 50 to be connected with an input end of the control board 18, and an outer side of the control socket 4 is connected to a control plug. The arrangement of the electrical connector 9 ensures that the cooling oil in the first cavity 71 and the second cavity 72 will not enter the space within the controller rear housing 16. The output ends of the drive board 17 and the control board 18 are respectively connected with the outer (left) pins of the electrical connector 9. The arrangement of the capacitor 43 has the functions of filtering, coupling, voltage reduction, resonance, etc., which makes the operation more stable and reliable. The high-voltage socket 3 and the control socket 4 are mounted to the rear housing 35.

A fourth sealing groove 47 is formed outside an end of the motor pump housing 7 provided with a flange, and the fourth sealing groove 47 is used for sealing connection with the electro-hydrostatic actuator (EHA) system through the flange and a spigot, so as to realize plug and play.

In this embodiment, the cooling oil groove 39, the first annular groove 41, the second annular groove 42 and the cold oil inlet 32 are not provided.

A following cooling oil circuit is formed: entering from one end of the central hole 26, flowing out from the other end of the central hole 26 to the cavity between the end cover 22 and the rear cover 19, passing through the gap between the rotating shaft 25 and the end cover 22, sequentially flowing through the second cavity 72 and the first cavity 71, and finally flowing out from the low-pressure oil drain hole 30.

Moreover, in this embodiment, the heat dissipation fan 15 is not provided, and the optimal design of the servo motor and the forced cooling of oil are mainly relied on. In addition, combined with the layout and arrangement of the controller mounting cavity, the axial size of the integrated servo motor pump is reduced and thus the structure is more compact.

The implementation principle of the present disclosure is as follows.

The cold oil of the EHA system flows in from the central hole 26 and flows along the central hole 26 to the other end of the rotating shaft 25. After flowing out from the end of the rotating shaft 25, the cold oil enters the cavity between the rear cover 19 and the end cover 22, flows into the second cavity 72 and the first cavity 71 in sequence after passing through the gap between the rotating shaft 25 and the end cover 22, and finally flows back to the EHA system from the low-pressure oil drain hole 30 to be cooled again for recycling.

### Embodiment 3

A cooling structure of a servo motor pump is arranged in a motor pump housing, and the motor pump housing 7 is provided with a first cavity 71 for accommodating a piston pump assembly 5 and a second cavity 72 for accommodating a servo motor assembly 6. The servo motor assembly 6 includes a stator component 8 and a rotor component 23, and a piston pump rotor and the rotor component 23 are coaxially connected through a rotating shaft 25.

As shown in Fig. 8, the cooling structure includes an valve plate 29 arranged in the first cavity 71 and a central hole 26 penetrating the rotating shaft 25 at an axis position thereof. The valve plate 29 is connected in the first cavity 71 and used to support an end of the rotating shaft 25 adjacent to the piston pump assembly 5. The valve plate 29 is provided with a low-pressure oil drain hole 30 penetrating the valve plate 29. One end of the central hole 26 is communicated with an external cooling oil, the other end of the central hole 26 is communicated with the second cavity 72, and the first cavity 71 is communicated with the second cavity 72. The first cavity 71 is communicated with a low-pressure oil of the EHA system through the low-pressure oil drain hole 30, and the low-pressure oil is recycled after being cooled.

Further, as shown in Fig. 4, the cooling structure may also include a cooling oil groove 39, a first annular groove 41 and a second annular groove 42, which are all arranged to the motor pump housing 7. The cooling oil groove 39 is arranged at a contact surface between an inner wall of the motor pump housing 7 and the stator component 8. One end of the cooling oil groove 39 is communicated with a cold oil inlet 32, and the other end of the cooling oil groove 39 is communicated with the second cavity 72. The first annular groove 41 is communicated with a plurality of cooling oil grooves 39, and the second annular groove 42 is communicated with the plurality of cooling oil grooves 39 and the second cavity 72. The second annular groove 42 is located on a side of the first annular groove 41 facing away from the cold oil inlet 32.

Although the present disclosure has been disclosed in terms of preferred embodiments, they are not intended to limit the present disclosure. Any skilled person in the art can make possible changes and modifications without departing from the spirit and scope of the present disclosure. Therefore, the scope of protection of the present disclosure should be based on the scope defined by claims of the present disclosure.

## Claims

1. A drive and control integrated servo motor pump, comprising a piston pump assembly (5), a servo motor assembly (6), a drive controller (2), a rear housing (35) and a drive and control housing,
wherein the rear housing (35) is connected to an end of a motor pump housing (7), and an integral structure formed by the motor pump housing (7) and the rear housing (35) defines a controller mounting cavity, a first cavity (71) and a second cavity (72) therein, wherein the first cavity (71) is configured to accommodate the piston pump assembly (5), the second cavity (72) is configured to accommodate the servo motor assembly (6), the piston pump assembly (5) comprises a piston pump rotor, the servo motor assembly (6) comprises a stator component (8) and a rotor component (23), and the piston pump rotor and the rotor component (23) are coaxially connected through a rotating shaft (25); and the controller mounting cavity is configured to accommodate the drive controller (2); and
wherein the servo motor assembly (6) is configured to drive the piston pump assembly (5) to realize forward rotation and reverse rotation, and the drive controller (2) is configured to drive and control the servo motor assembly (6) to operate.

2. The drive and control integrated servo motor pump according to claim 1, wherein the motor pump housing (7) is provided with a blind hole (37), the blind hole (37) is located at a side of the second cavity (72), one end of the blind hole (37) is communicated with the second cavity (72) through a motor wire hole (49), and the other end of the blind hole (37) is communicated with the controller mounting cavity;
an electrical connector (9) is hermetically connected in the blind hole (37) so that the second cavity (72) is not communicated with the controller mounting cavity, the electrical connector (9) is connected with the servo motor assembly (6) and the drive controller (2), a connecting line between the electrical connector (9) and the servo motor assembly (6) passes through the blind hole (37) and the motor wire hole (49), and a connecting line between the electrical connector (9) and the drive controller (2) passes through a communicated region of the blind hole (37) and the controller mounting cavity; and
an end of the servo motor assembly (6) far away from the piston pump assembly (5) is hermetically connected with an inner wall of the second cavity (72).

3. The drive and control integrated servo motor pump according to claim 2, wherein an end cover (22) and a rear cover (19) are connected in the motor pump housing (7), the end cover (22) is located at an end of the second cavity (72) far away from the first cavity (71), the end cover (22) is sealed with the inner wall of the second cavity (72), an end of the rotating shaft (25) passes through the end cover (22), and supports and is connected with the end cover (22), the rear cover (19) is connected with a side of the end cover (22) far away from the first cavity (71), and the rear cover (19) is hermetically connected with the end cover (22).

4. The drive and control integrated servo motor pump according to claim 2, wherein the controller mounting cavity is a space within the rear housing (35); a lead on one side of the electrical connector (9) passes through the motor wire hole (49) and is connected with the stator component (8), and a lead on the other side of the electrical connector (9) is connected with the drive controller (2).

5. The drive and control integrated servo motor pump according to claim 4, wherein a heat dissipation fan (15) is mounted on a side of the rear housing (35) facing away from the motor pump housing (7).

6. The drive and control integrated servo motor pump according to claim 2, wherein the drive and control housing comprises the motor pump housing (7) and a controller housing (16), the controller housing (16) and the motor pump housing (7) enclose and form the controller mounting cavity, and the controller mounting cavity is communicated with the blind hole (37) and located on a side of the second cavity (72); and the drive controller (2) located in the controller mounting cavity is electrically connected with the servo motor assembly (6) through the electrical connector (9).

7. The drive and control integrated servo motor pump according to claim 6, wherein a capacitor (43) is arranged in the rear housing (35), an input wire of the capacitor (43) is connected with an external power supply, and an output wire of the capacitor (43) is connected with a power input end of the drive controller (2).

8. The drive and control integrated servo motor pump according to claim 7, wherein the rear housing (35) is provided with a threading hole, and the threading hole penetrates an inner wall and an outer wall of the rear housing (35); and the output wire of the capacitor (43) penetrates out of the rear housing (35) from the threading hole, then penetrates into the controller mounting cavity and is connected with the power input end of the drive controller (2), and the input wire of the capacitor (43) is connected with an external power supply, so that a space within the rear housing (35) is not communicated with the second cavity.

9. The drive and control integrated servo motor pump according to any one of claims 1-8, wherein an valve plate (29) is arranged in the first cavity (71), and the valve plate (29) is connected in the first cavity (71) and configured to support an end of the rotating shaft (25) adjacent to the piston pump assembly (5); and
the valve plate (29) is provided with a low-pressure oil drain hole (30) penetrating through the valve plate (29), the rotating shaft (25) is provided with a central hole (26), and the central hole (26) penetrates through the rotating shaft (25) at an axis position of the rotating shaft (25).

10. The drive and control integrated servo motor pump according to claim 9, wherein at least two low-pressure oil drain holes (30) are arranged, and the at least two low-pressure oil drain holes (30) are evenly distributed on the valve plate (29) around an axis of the rotating shaft (25).

11. The drive and control integrated servo motor pump according to claim 9, wherein an end of the motor pump housing (7) adjacent to the piston pump assembly (5) is provided with a cold oil inlet (32), an inner wall of the motor pump housing (7) is provided with a cooling oil groove (39), one end of the cooling oil groove (39) is communicated with the cold oil inlet (32), and the other end of the cooling oil groove (39) is communicated with the second cavity (72).

12. The drive and control integrated servo motor pump according to claim 11, wherein a plurality of cooling oil grooves (39) are arranged, and the plurality of cooling oil grooves (39) are evenly distributed on the motor pump housing (7) around an axis of the rotating shaft (25).

13. The drive and control integrated servo motor pump according to claim 12, wherein the motor pump housing (7) is provided with a first annular groove (41), and the first annular groove (41) is communicated with the plurality of cooling oil grooves (39).

14. The drive and control integrated servo motor pump according to claim 13, wherein the inner wall of the motor pump housing (7) is provided with a second annular groove (42), the second annular groove (42) is communicated with the plurality of cooling oil grooves (39), the second annular groove (42) communicates the cooling oil groove (39) with the second cavity (72), and the second annular groove (42) is located on a side of the first annular groove (41) facing away from the cold oil inlet (32).

15. The drive and control integrated servo motor pump according to claim 14, wherein the first annular groove (41) is located at an end of the second cavity (72) adjacent to the piston pump assembly (5); and the second annular groove (42) is located at an end of the motor pump housing (7) far away from the piston pump assembly (5).

16. The drive and control integrated servo motor pump according to claim 3, wherein an outer circumferential surface of the end cover (22) is provided with a second sealing groove (21), and a second sealing ring is arranged in the second sealing groove (21), and is configured for sealing between the end cover (22) and an inner wall of the motor pump housing (7).

17. The drive and control integrated servo motor pump according to claim 3, wherein the end cover (22) is provided with a through hole, the rotating shaft (25) passes through the through hole, the rear cover (19) is provided with a spigot inserted into the through hole at a position opposite to the through hole, a first sealing groove (20) is arranged on the spigot in a circumferential direction of the spigot, and a first sealing ring is arranged in the first sealing groove (20), and is configured for sealing between the spigot of the rear cover and an inner wall of the end cover defining the through hole.

18. The drive and control integrated servo motor pump according to claim 2, wherein a third sealing groove (12) is arranged on the electrical connector (9) in a circumferential direction of the electrical connector (9), and a third sealing ring is arranged in the third sealing groove (12), and is configured to seal the blind hole (37).

19. The drive and control integrated servo motor pump according to any one of claims 1-8, wherein a plurality of heat dissipation grooves (33) for heat dissipation are arranged on an outer periphery of the motor pump housing (7).

20. A cooling structure of a servo motor pump, arranged in a motor pump housing (7), wherein the motor pump housing (7) defines a first cavity (71) for accommodating a piston pump assembly (5) and a second cavity (72) for accommodating a servo motor assembly (6), and the servo motor assembly (6) comprises a stator component (8) and a rotor component (23), and a piston pump rotor and the rotor component (23) are coaxially connected through a rotating shaft (25);
the cooling structure comprises an valve plate (29) arranged in the first cavity (71) and a central hole (26) penetrating the rotating shaft (25) at an axis position of the rotating shaft (25), the valve plate (29) is connected in the first cavity (71) and configured to support an end of the rotating shaft (25) adjacent to the piston pump assembly (5); and the valve plate (29) is provided with a low-pressure oil drain hole (30) penetrating through the valve plate (29); and
one end of the central hole (26) is communicated with an external oil, the other end of the central hole (26) is communicated with the second cavity (72), the first cavity (71) is communicated with the second cavity (72), the first cavity (71) is communicated with the external oil through the low-pressure oil drain hole (30), an inner wall of the motor pump housing (7) is provided with a plurality of cooling oil grooves (39), one end of the cooling oil groove (39) is communicated with the external oil, and the other end of the cooling oil groove (39) is communicated with the second cavity (72).

21. The cooling structure of the servo motor pump according to claim 20, wherein the motor pump housing (7) is provided with a first annular groove (41), and the first annular groove (41) is communicated with the plurality of cooling oil grooves (39); and the inner wall of the motor pump housing (7) is provided with a second annular groove (42), the second annular groove (42) is communicated with the plurality of cooling oil grooves (39), the second annular groove (42) communicates the cooling oil groove (39) with the second cavity (72), and the second annular groove (42) is located on a side of the first annular groove (41) facing away from a cold oil inlet (32).
